# EUROPÄISCHE PATENTSCHRIFT

(11) **EP 1 772 729 B1**
(45) Veröffentlichungstag und Bekanntmachung des Hinweises auf die Patenterteilung: **10.02.2010**
(21) Anmeldenummer: 06018810.9
(22) Anmeldetag: 08.09.2006
(51) Int. Cl.: G01N 27/416, G01N 27/413

(54) **Messeinrichtung für elektrochemische Messgrössen in Flüssigkeiten, insbesondere pH- oder Redoxpotential-Messeinrichtung sowie Verfahren zum Messen solcher elektrochemischer Messgrössen**
Measuring device for electrochemical quantities in liquids, especially pH or redox-potential measuring device, and method for measuring such quantities
Dispositif de mesure pour des quantités électrochimiques dans des liquides, notamment pour mesurer le pH ou le potentiel redox, et méthode pour mesurer lesdites quantités

(30) Priorität: 08.10.2005 DE 102005048273
(43) Veröffentlichungstag der Anmeldung: 11.04.2007
(73) Patentinhaber: Knick Elektronische Messgeräte GmbH & Co. KG, 14163 Berlin (DE)
(72) Erfinder: Martell, Thomas, Dipl.-Ing., 14513 Teltow (DE)
(74) Vertreter: Hübner, Gerd

(56) Entgegenhaltungen:
- EP-A- 1 248 101
- WO-A-95/26500
- WO-A-98/14772
- WO-A-98/50789
- US-A- 5 970 428
- US-A1- 2003 132 755

## Beschreibung

Die Erfindung betrifft eine Messeinrichtung für elektrochemische Messgrößen in Flüssigkeiten, insbesondere eine pH- oder Redoxpotential-Messeinrichtung, mit den im Oberbegriff des Anspruches 1 angegebenen Merkmalen sowie ein Verfahren zum Messen solcher elektrochemischer Messgrößen mit den im Oberbegriff des Anspruches 6 angegebenen Verfahrensschritten.

Eine derartige Messeinrichtung und das entsprechende Verfahren sind aus der Beschreibungseinleitung der DE 101 17 627 A1 in der dortigen Figur 1 mit einer zugehörigen Schilderung des Standes der Technik bekannt. Danach ist jeweils eine in die Messflüssigkeit eintauchbare Messelektrode, Referenzelektrode und Bezugselektrode vorgesehen. In einer Messschaltung ist je eine Eingangsschaltung mit der Mess- bzw. Referenzelektrode zur Aufnahme der Signale verbunden. Zwischen den Ausgängen dieser Eingangsschaltungen ist eine Subtraktionseinheit zur Bildung eines Differenzsignals geschaltet, das repräsentativ für die zu messende elektrochemische Messgröße der Flüssigkeit, also insbesondere deren pH-Wert ist. Schließlich ist die Bezugselektrode beim Stand der Technik direkt mit der Bezugsmasse der Messeinrichtung gekoppelt, die damit symmetrisch beschaltet ist. Der pH-Wert der Messflüssigkeit stellt sich so aus der Differenz der Spannungen der Referenzelektrode zur Bezugselektrode und der Messelektrode zur Bezugselektrode dar.

Diese symmetrische Beschaltung bringt das Problem mit sich, dass der Versorgungsspannungsbereich der Messschaltung größer als die Summe der möglicherweise auftretenden Spannungswerte insbesondere zwischen Bezugs- und Referenzelektrode sein muss. Damit ist die Schaltung für moderne Messschaltungen in ihrer Eignung beschränkt, da zunehmend eine Tendenz zu niedrigeren und vor allem unipolaren Versorgungsspannungen festzustellen ist. So liegen die Spannungswerte bei mikrocontrollergesteuerten Systemen derzeit typisch bei einer unipolaren Versorgungsspannung von 3 V.

Wenngleich die Bezugselektrode bei der symmetrischen Beschaltung durch die direkte Leitungskopplung zur Bezugsmasse der Messeinrichtung eine sehr niederohmige Verbindung aufweist und damit eventuell auftretende, den Versorgungsspannungsbereich der Schaltung übersteigende Störspannungen gut abgeleitet werden, bleibt das vorher erwähnte Problem der mit einzubeziehenden Spannung zwischen Referenz- und Bezugselektrode. Grundsätzlich ist allerdings bei dieser symmetrischen Beschaltung eine Impedanzmessung der Messelektrode und der Referenzelektrode zu Kontrollzwecken über die gemeinsame Verbindung der Bezugselektrode mit der Bezugsmasse der Messeinrichtung möglich.

Einen Ansatzpunkt zur Lösung der vorstehenden Problematik bietet die erwähnte DE 101 17 627 A1 in der dort anhand von Figur 2 beschriebenen, eigentlichen Erfindung. Demnach wird ein mögliches Störpotential, das sich zwischen der Bezugselektrode und der Messflüssigkeit einstellen kann, kompensiert, indem das an der Bezugselektrode anliegende Bezugspotential in Abhängigkeit von dem Störpotential derart eingestellt ist, dass das Signal der Referenzelektrode einen vorgebbaren Wert, insbesondere den Wert 0 annimmt. Dies wird durch ein gesondertes Reglerelement in Form eines Operationsverstärkers realisiert, an dessen nicht-invertierenden Eingang das Referenzsignal, an dessen invertierenden Eingang die Bezugsmasse und an dessen Ausgang die Bezugselektrode anliegt. Das Bezugspotential wird also gegenläufig zu einem elektrochemischen Störpotential nachgeregelt, indem das Referenzpotential an der Referenzelektrode als 0 V definiert wird. Damit steht an dem Anschluss der Messelektrode ein offsetfreies Messsignal zur Verfügung.

Ein Nachteil bei der vorbekannten Schaltung ist der zusätzliche Schaltungsaufwand für die Regelung des Bezugspotentials. Ferner sind bei der Messeinrichtung gemäß der DE 101 17 627 A1 keine Maßnahmen vorgesehen, eine getrennte Messung der Impedanzwerte der Referenz- und der Messelektrode zu ermöglichen.

Schließlich ist es aus dem Stand der Technik bekannt, im Rahmen einer sogenannten unsymmetrischen Beschaltung auf eine Bezugselektrode zu verzichten und die Referenzelektrode mit der Bezugsmasse der Messschaltung zu verbinden. Damit kann ebenfalls ein entsprechendes Messsignal der Messflüssigkeit aus der Differenzspannung der Messelektrode und der Referenzelektrode ermittelt werden. Eventuell auftretende Störspannungen werden dann jedoch nicht mehr über eine niederohmige Bezugselektrode abgeleitet und beeinflussen so das Messsignal.

Ein weiteres Problem ergibt sich bei der Impedanzmessung der Referenzelektrode, die mit der Messelektrode bei der unsymmetrischen Beschaltung eine Reihenschaltung bildet. Damit ist nur die Summe der Impedanzwerte der Referenz- und Messelektrode erfassbar. Da nun die Impedanz der Messelektrode um mehrere Potenzen größer als die der Referenzelektrode ist, kann die Impedanz der Referenzelektrode nicht separat ermittelt werden.

Wenngleich bei der unsymmetrischen Beschaltung der Versorgungsspannungsbereich der Messschaltung verkleinert werden kann, da die Differenzspannung der Mess- und der Referenzelektrode deutlich kleiner ist als die der möglicherweise auftretenden Differenzspannung der Bezugs- zur Referenzelektrode und die Versorgungsspannung nicht mehr das relativ große Potential der Bezugselektrode mit abdecken muss, behindern die oben erörterten Probleme hinsichtlich der Störeinflüsse und mangelnden Impedanz-Messmöglichkeiten für Messelektrode und Referenzelektrode in separater Weise die Anwendung der unsymmetrischen Beschaltung bei modernen Messschaltungen und entsprechenden -einrichtungen.

Im Hinblick auf die verschiedenen Probleme des Standes der Technik liegt der Erfindung die Aufgabe zugrunde, eine Messeinrichtung für elektrochemische Messgrößen sowie ein entsprechendes Messverfahren so auszulegen, dass bei einer möglichst großen Reduktion des Versorgungsspannungsbedarfs der Messschaltung eine genaue und störunempfindliche Messung elektrochemischer Größen bei zusätzlich getrennter Messbarkeit der Impedanzwerte von Referenz- und Messelektrode ermöglicht werden.

Diese Aufgabe wird in vorrichtungstechnischer Hinsicht durch die kennzeichnenden Merkmale des Anspruches 1, in verfahrenstechnischer Hinsicht durch diejenigen des Anspruches 6 gelöst. Demnach ist Kern der Erfindung eine rein kapazitive Anbindung der Bezugselektrode an die Bezugsmasse der Messschaltung und eine hochohmige Fixierung der Referenzelektrode auf ein Festpotential.

Aufgrund der kapazitiven Ankopplung der Bezugselektrode werden Störeinflüsse seitens der Messflüssigkeit über die Kapazität niederohmig abgeleitet. Die Spannung an dem entsprechenden Kondensator stellt sich dabei auf die Differenz des Potentials der Bezugselektrode zur Bezugsmasse der Messschaltung ein und braucht somit nicht vom Versorgungsspannungsbereich der Messschaltung umfasst werden.

Der weitere Aspekt der getrennten Messung der Impedanzwerte der Referenz- und der Messelektrode wird durch die hochohmige Festlegung der Referenzelektrode auf ein festes Potential erfüllt. Der Widerstandswert dieser Anbindung ist dann bei der Ermittlung des Impedanzwertes der Referenzelektrode zu berücksichtigen.

Grundsätzlich können die Impedanzmessungen durch getrennte kapazitive Einkopplung von Wechselspannungen auf die Referenz- und Messelektrode vorgenommen werden, wie dies in dem Patent EP 0 497 994 B1 der Anmelderin umfassend beschrieben ist. Die gemeinsame kapazitive Ableitung der Wechselsignale über die Bezugselektrode verhindert dabei eine gegenseitige Beeinflussung der Erfassung der Impedanzen von Referenz- und Messelektrode.

Schließlich ist von Vorteil bei der Vorrichtung und dem Verfahren gemäß der Erfindung, dass bei entsprechender Wahl der Bezugselektrode - beispielsweise in Form einer Platinelektrode - die Redoxspannung des Systems zu ermitteln ist. Sofern der Versorgungsspannungsbereich der Messeinrichtung größer als die Redoxspannung ist, kann letztere messtechnisch erfasst werden. Hierzu wird zusätzlich die Spannung der Bezugselektrode gemessen und mit der Spannung der Referenzelektrode verrechnet.

Schließlich hat die Erfindung den Vorteil, dass sich auf die Redoxspannung die eigentliche Messspannung, also beispielsweise die pH-Spannung, sowie die für die Impedanzmessungen überlagerten Wechselspannungen nicht aufaddieren. Zusammenfassend kann also mit einer relativ kleinen, auch unipolaren Versorgungsspannung ein weiter Messbereich abgedeckt werden, wie anhand entsprechender Potentialbeispiele in der Beschreibung des Ausführungsbeispiels deutlich wird. Aufgrund der möglichen kleinen Versorgungsspannung kann die Spannungsmessung bei der Messeinrichtung mit einem standardmäßig in einen Mikrocontroller integrierten Analog-Digital-Wandler erfolgen, was eine starke gerätetechnische Vereinfachung mit sich bringt.

Weitere Merkmale, Einzelheiten und Vorteile der Erfindung ergeben sich aus der nachfolgenden Beschreibung, in der ein Ausführungsbeispiel anhand der beigefügten Zeichnungen näher erläutert wird. Es zeigen:
- Fig. 1: ein Schaltungsdiagramm der Messeinrichtung, und
- Fig. 2 bis 4: Balkendiagramme messrelevanter Spannungen innerhalb des Versorgungsspannungsbereiches der Messeinrichtung.

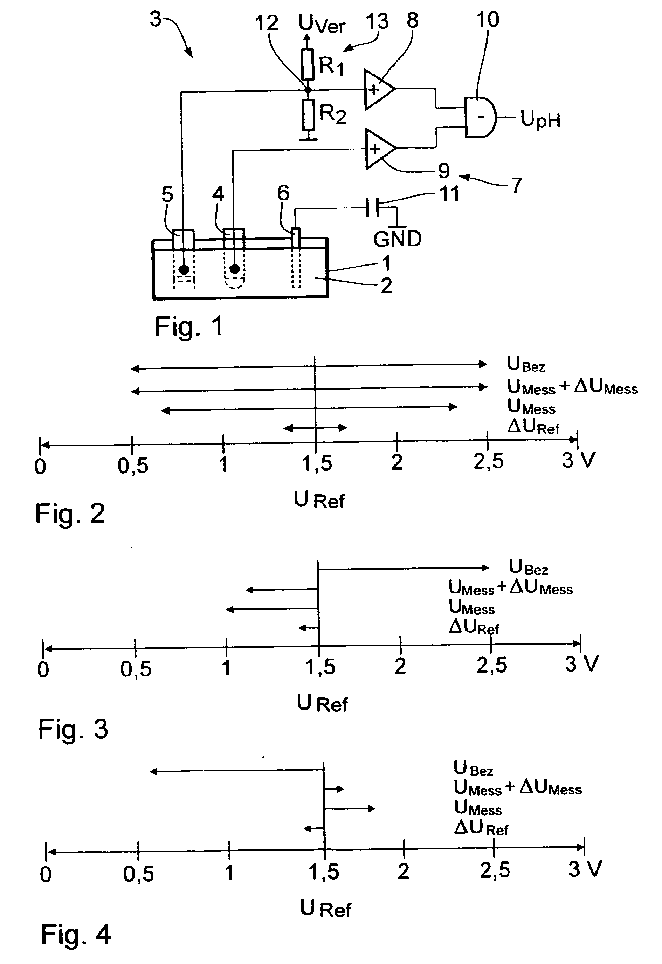

Fig. 1 zeigt einen Behälter 1 mit einer darin befindlichen Messflüssigkeit 2, deren pH-Wert zu bestimmen ist. Dazu dient die als Ganzes mit 3 bezeichnete Messeinrichtung. Diese umfasst eine Messelektrode 4, eine Referenzelektrode 5 sowie eine Bezugselektrode 6, die in die Messflüssigkeit 2 eintauchen. Die Elektroden 4, 5, 6 sind mit den jeweiligen, im Diagramm nicht näher dargestellten Eingängen der Messschaltung 7 verbunden, wobei die Signale der Mess- 4 und Referenzelektrode 5 jeweils von einer Eingangsschaltung 8, 9 in Form eines als Impedanzwandler oder Spannungsfolger beschalteten Operationsverstärkers aufgenommen werden. Die Ausgänge der Operationsverstärker der Eingangsschaltungen 8, 9 werden auf die Eingänge eines Subtrahieres 10 gelegt, der aus den von der Referenzelektrode 5 und der Messelektrode 4 gegenüber der Bezugsmasse GND gemessenen Spannungswerten ein Differenzsignal U_{pH} erzeugt, das für den pH-Wert der Messflüssigkeit 2 repräsentativ ist.

Wie aus dem Schaltungsdiagramm gemäß Fig. 1 hervorgeht, ist die Bezugselektrode 6 mit ihrem Potential an die Bezugsmasse GND der Messschaltung 7 über einen Kondensator 11 rein kapazitiv angebunden. Ferner ist die Referenzelektrode hochohmig auf ein festes Potential von beispielsweise der halben Versorgungsspannung U_{Ver} fixiert, indem die Anbindung der Referenzelektrode an die Eingangsschaltung 8 über den Mittenabgriff 12 eines aus zwei Widerständen R1, R2 bestehenden Spannungsteilers 13 geführt wird. Bei einem Versorgungsspannungsbereich von 0 bis 3 V wird also die Referenzelektrode 5 auf einem Potential von 1,5 V bei symmetrischen Widerständen R1, R2 festgelegt.

Anhand der Fig. 2 bis 4 können die Potentialverhältnisse für eine unipolare Versorgungsspannung von 3 V dargestellt werden, wie sie vorzugsweise für mikrocontroller-gesteuerte Systeme eingesetzt werden. Die Spannungswerte sind auf die Bezugsmasse GND bzw. 0 V der Versorgungsspannung U_{Ver} bezogen. Wie dargestellt, ist das Potential U_{Ref} der Referenzelektrode 5 auf 1,5 V angebunden, was für alle drei Diagramme gemäß Fig. 2 bis 4 gilt.

In Fig. 2 sind nun Bandbreiten der verschiedenen Spannungen und Potentiale aufgetragen. So bewirkt beispielsweise die Impedanzmessung der Referenzelektrode ein ΔU_{Ref} von ± 0,2 V. Das pH-Wert-abhängige Spannungspotential U_{Mess} umfasst einen Bereich von beispielsweise ± 0,8 V. Wird für die Impedanzmessung der Messelektrode 4 wiederum ein Spannungsbereich von beispielsweise ± 0,2 V angesetzt, so ergibt sich eine Potentialbandbreite U_{Mess} + ΔU_{Mess} für die Messelektrode 4 von ca. ± 1,0 V.

Das Potential der Bezugselektrode 6 ist abhängig von dem dafür verwendeten Material und bildet im Falle einer Platinelektrode als Differenz zur Referenzelektrode 5 die Redoxspannung bzw. das Redoxpotential U_{Bez} ab. Als Beispiel wurde in Fig. 2 eine Bandbreite der Redoxspannung U_{Bez} von ± 1 V vorgegeben.

Die in den Fig. 3 und 4 dargestellten Spannungsdiagramme zeigen, dass für verschiedene pH-Spannungswerte, Redoxspannungen und Spannungsanteile für die Impedanzmessungen der Mess- und Referenzelektrode 4, 5 ein Versorgungsspannungsbereich von 0 bis 3 V ausreicht.

Folgende Spannungswerte wurden für Fig. 2 / Fig. 3 zugrunde gelegt:
Redox-Spannung U_{Bez} = + 1 V/- 1 V
pH-Spannung U_{MESS} = - 0,5 V/+ 0,3 V
Impedanzmessung der Messelektrode ΔU_{Mess} = + 0,2 V/- 0,2 V und
Impedanzmessung der Referenzelektrode ΔU_{Ref} = + 0,2 V/- 0,2 V.

## Patentansprüche

1. Messeinrichtung für elektrochemische Messgrößen in Flüssigkeiten, insbesondere pH- oder Redoxpotential-Messeinrichtung (3), umfassend:
- eine jeweils in die Messflüssigkeit (2) eintauchbare Messelektrode (4), Referenzelektrode (5) und Bezugselektrode (6),
- eine Messschaltung (7) mit
= je einer Eingangsschaltung (8, 9), die mit der Mess- bzw. Referenzelektrode (4, 5) verbunden ist, und
= einer den Eingangsschaltungen (8, 9) von Mess- und Referenzelektrode (4, 5) ausgangsseitig nachgeschalteten Subtraktionseinheit (10) zur Bildung eines Differenzsignals (U_{pH}), das repräsentativ für die zu messende elektrochemische Messgröße ist, und
- eine Bezugsmasse (GND), mit der die Bezugselektrode (6) gekoppelt ist,
**gekennzeichnet durch**
- eine rein kapazitive Ankopplung der Bezugselektrode (6) an die Bezugsmasse (GND) und
- eine hochohmige Fixierung der Referenzelektrode (5) auf ein Festpotential (U_{Ref}).

2. Messeinrichtung nach Anspruch 1, **gekennzeichnet durch** einen zwischen Bezugselektrode (6) und Bezugsmasse (GND) gesetzten Kondensator (11).

3. Messeinrichtung nach einem der vorgenannten Ansprüche, **gekennzeichnet durch** einen hochohmigen Spannungsteiler (13), dessen Mittenabgriff (12) mit der Referenzelektrode (5) und der Referenz-Eingangsschaltung (9) verbunden ist.

4. Verfahren zum Messen elektrochemischer Messgrößen in Flüssigkeiten, insbesondere pH- oder Redoxpotential-Messverfahren, mit folgenden Verfahrensschritten:
- Eintauchen einer Messelektrode (4), Referenzelektrode (5) und Bezugselektrode (6) in eine Messflüssigkeit (2),
- Abgreifen des Potentials der jeweils in die Messflüssigkeit (2) eingetauchten Messelektrode (4) und Referenzelektrode (5), und
- Erzeugen eines für die zu messende elektrochemische Messgröße repräsentativen Differenzsignals (U_{pH}) aus diesen Potentialen,
**dadurch gekennzeichnet,**
- **dass** die Bezugselektrode (6) während der Messung rein kapazitiv an die Bezugsmasse (GND) angekoppelt wird und
- **dass** die Referenzelektrode (5) hochohmig auf ein Festpotential fixiert wird.

5. Verfahren nach Anspruch 4, **dadurch gekennzeichnet, dass** die Bezugselektrode (6) durch Zwischensetzen eines Kondensators (11) an die Bezugsmasse (GND) gekoppelt wird.

6. Verfahren nach Anspruch 4 oder 5, **dadurch gekennzeichnet, dass** die Referenzelektrode (5) mittels eines Spannungsteilers (13) auf das Festpotential (U_{Ref}) fixiert wird.

7. Verfahren nach Anspruch 6, **dadurch gekennzeichnet, dass** die Referenzelektrode (5) symmetrisch auf ein der halben Versorgungsspannung (U_{Ver}) entsprechendes Festpotential (U_{Ref}) fixiert wird.

## Claims

1. Device for measuring electrochemical quantities in liquids, in particular a pH or redox potential measuring device (3), comprising:
- a measuring electrode (4), reference electrode (5) and supply electrode (6), which are dipped into the measuring liquid (2),
- a measuring circuit (7) with
-- an input circuit (8, 9) that is connected to the measuring or reference electrode (4, 5) and
-- a subtraction unit (10) connected on the output side after the input circuits (8, 9) of the measurement and reference electrode (4, 5) for forming a difference signal (U_{pH}), which is representative of the electrochemical quantity to be measured, and
- a ground reference (GND), to which the supply electrode (6) is coupled,
**characterised by**
- a purely capacitive coupling of the supply electrode (6) to the ground reference (GND) and
- a high-resistant fixing of the reference electrode (5) at a fixed potential (U_{Ref}).

2. Measuring device according to claim 1, **characterised by** a capacitor (11) placed between the supply electrode (6) and ground reference (GND).

3. Measuring device according to one of the preceding claims, **characterised by** a high-resistance voltage divider (13), the middle pick-up (12) of which is connected to the reference electrode (5) and the reference input circuit (9).

4. Method for measuring electrochemical quantities in liquids, in particular a pH or redox potential measuring method with the following method steps:
- dipping a measuring electrode (4), reference electrode (5) and supply electrode (6) into a measuring liquid (2),
- picking up the potential of the measuring electrode (4) and reference electrode (5) dipped respectively into the measuring liquid (2) and
- generating a difference signal (U_{pH}) representative of the electrochemical quantity to be measured from said potentials,
**characterised in that**
- the supply electrode (6) is coupled during the measurement purely capacitively to the ground mass (GND) and
- **in that** the reference electrode (5) is fixed with high-resistance at a fixed potential.

5. Method according to claim 4, **characterised in that** the supply electrode (6) is coupled by inserting a capacitor (11) onto the ground reference (GND).

6. Method according to claim 4 or 5, **characterised in that** the reference electrode (5) is fixed by means of a voltage divider (13) at the fixed potential (U_{Ref}).

7. Method according to claim 6, **characterised in that** the reference electrode (5) is fixed symmetrically at a fixed potential (U_{Ref}) corresponding to half the supply voltage (U_{Ver}).

## Revendications

1. Dispositif de mesure pour des quantités électrochimiques dans des liquides, notamment dispositif (3) pour mesurer le pH ou le potentiel redox, comprenant :
- une électrode de mesure (4), une électrode de référence (5) et une électrode de comparaison (6) pouvant respectivement être plongées dans le liquide de mesure (2),
- un circuit de mesure (7) comportant :
= respectivement un circuit d'entrée (8, 9) relié à l'électrode de mesure ou de référence (4, 5), et
= une unité de soustraction (10) située en aval, côté sortie, des circuits d'entrée (8, 9) des électrodes de mesure et de référence (4, 5) pour former un signal différentiel (U_{pH}) représentatif de la quantité électrochimique à mesurer, et
- une masse de référence (GND) à laquelle est couplée l'électrode de comparaison (6),
**caractérisé par**
- un couplage purement capacitif de l'électrode de comparaison (6) à la masse de référence (GND) et
- une fixation à valeur ohmique élevée de l'électrode de référence (5) sur un potentiel fixe (U_{Ref})_{.}

2. Dispositif de mesure selon la revendication 1, **caractérisé par** un condensateur (11) placé entre l'électrode de comparaison (6) et la masse de référence (GND).

3. Dispositif de mesure selon l'une des revendications précédentes, **caractérisé par** un diviseur de tension (13) à valeur ohmique élevée dont la prise centrale (12) est reliée à l'électrode de référence (5) et au circuit d'entrée de référence (9).

4. Procédé de mesure de quantités électrochimiques dans des liquides, notamment procédé de mesure du pH ou du potentiel redox, comprenant les étapes suivantes :
- immersion d'une électrode de mesure (4), électrode de référence (5) et électrode de comparaison (6) dans un liquide de mesure (2),
- prise du potentiel de l'électrode de mesure (4) et de l'électrode de référence (5) respectivement plongées dans le liquide de mesure (2), et
- génération d'un signal différentiel (U_{pH}) représentatif de la quantité électrochimique à mesurer à partir de ces potentiels,
**caractérisé en ce que**
- pendant la mesure, l'électrode de comparaison (6) est couplée de manière purement capacitive à la masse de référence (GND), et
- **en ce que** l'électrode de référence (5) est fixée avec une valeur ohmique élevée sur un potentiel fixe.

5. Procédé selon la revendication 4, **caractérisé en ce que** l'électrode de comparaison (6) est couplée à la masse de référence (GND) par interposition d'un condensateur (11).

6. Procédé selon la revendication 4 ou 5, **caractérisé en ce que** l'électrode de référence (5) est fixée sur le potentiel fixe (U_{Ref}) au moyen d'un diviseur de tension (13).

7. Procédé selon la revendication 6, **caractérisé en ce que** l'électrode de référence (5) est fixée de manière symétrique sur un potentiel fixe (U_{Ref}) correspondant à la moitié de la tension d'alimentation (U_{Ver}).
